# Europäisches Patentamt

# European Patent Office

# Office européen des brevets

(19)

(11) Veröffentlichungsnummer: **0 151 276**
**B1**

(12) # EUROPÄISCHE PATENTSCHRIFT

(45) Veröffentlichungstag der Patentschrift:
**28.10.87**

(51) Int. Cl.⁴: **A 61 C 5/02**

(21) Anmeldenummer: **84115203.6**

(22) Anmeldetag: **12.12.84**

(54) Klemmgriff für Zahnwurzelkanal-Instrumente.

(30) Priorität: **02.02.84 DE 3403654**

(43) Veröffentlichungstag der Anmeldung:
**14.08.85 Patentblatt 85/33**

(45) Bekanntmachung des Hinweises auf die Patenterteilung:
**28.10.87 Patentblatt 87/44**

(84) Benannte Vertragsstaaten:
**CH FR LI SE**

(56) Entgegenhaltungen:
**CH - A - 261 685**
**DE - B - 2 404 151**
**DE - B - 2 703 637**
**DE - C - 659 438**
**DE - C - 889 672**
**DE - C - 929 867**
**FR - A - 1 505 786**
**US - A - 2 564 893**

**Die Akte enthält technische Angaben, die nach dem Eingang der Anmeldung eingereicht wurden und die nicht in dieser Patentschrift enthalten sind.**

(73) Patentinhaber: **Vereinigte Dentalwerke Antaeos-Beutelrock-Zipperer Zdarsky Ehrler GmbH & Co. KG, Steinerstrasse 6, D-8000 München 70 (DE)**

(72) Erfinder: **Listl, Alfons, Gartenstrasse 8, D-8120 Weilheim (DE)**

(74) Vertreter: **Hain, Leonhard, Dipl.-Ing., Tal 18/IV, D-8000 München 2 (DE)**

## Beschreibung

Die Erfindung betrifft einen Klemmgriff zur Halterung eines Zahnwurzelkanal-Instrumentes gemäss dem ersten Teil des Patentanspruches 1.

Bei einem Klemmgriff dieser Art (DE-B-2 703 637) befindet sich zum Verklemmen des Instrumentes zwischen einer stirnseitigen Druckfläche des Schraubkopfes und einer Druckfläche der Schaubkappe eine geneigte Klemmscheibe, die beim Verschrauben dieser Schrauborgane gegenüber dem Instrumentenschaft verkantet und dieses hierdurch verklemmt. Die Herstellung einer solch verhältnismässig kleinen Klemmscheibe ist jedoch schwierig, da bereits geringe Abweichungen von den Vorgabemassen ihre Funktion beeinträchtigen. Häufig tritt auch im ungespannten Zustand eine Selbsthemmung ein, so dass eine ruckfreie Nachkorrektur der Instrumentenlänge dann nicht mehr möglich ist. In der Praxis hat sich ferner gezeigt, dass bei einer Demontage des Griffes die kleine Klemmscheibe leicht verloren wird. In einem Handstück für ein zahnärztliches Bohrwerkzeug (DE-C-659 438) wird der Schaft des Werkzeuges von einer Schraubenfeder umspannt, die sich beim Reiben auf dem Werkzeugschaft verengt und dadurch die Drehbewegung der Treibachse des Handstückes auf das Werkzeug überträgt. Dabei greift die Feder mit ihren Enden in Widerlager der Triebwelle ein, die eine Mitnahme des Werkzeuges ermöglichen. Da der lichte Innendurchmesser der Feder etwas kleiner als der Aussendurchmesser des Werkzeugschaftes ist, wird das Werkzeug stets von der Feder gehalten. Ein ruckfreies Verschieben des Werkzeuges in dieser Halterung ist daher nicht möglich. Ausserdem wird ein Reibungsschluss zwischen der Feder und dem Werkzeug für die Klemmverbindung während einer andauernden Rotationsbewegung wirksam. Es ist ferner eine Klemmvorrichtung für zahnärztliche Bohrer (DE-C-889 672) bekannt, bei der der Bohrerschaft in eine konisch gewickelte Feder eingesteckt ist und durch die sich verengenden Windungen festgehalten wird. Diese Halterung ermöglicht weder ein Einstellen des Instrumentes auf verschiedene Arbeitslängen, beispielsweise zum Anpassen an die Tiefe eines Zahnwurzelkanals, noch ist ein ruckfreies Verschieben des Instrumentes in seiner Halterung möglich.

Der Erfindung liegt daher die Aufgabe zugrunde, einen Klemmgriff zur Halterung eines Zahnwurzelkanal-Instrumentes zu schaffen, der, mit einem einfachen und billigen Klemmorgan ausgerüstet, schon mit geringem Kraftaufwand eine sicher und schnell wirkende Klemmverbindung gewährleistet, die auch wieder leicht lösbar ist.

Diese Aufgabe wird an einem Klemmgriff der eingangs genannten Art erfindungsgemäss durch die Kennzeichnungsmerkmale des Patentanspruches 1 gelöst.

Beim Verschrauben der Schraubkappe mit dem Schraubkopf wird die unter Passsitz und Reibungsschluss in die sich nach innen konisch verjüngenden Aufnahmebohrungen eingesetzte Schraubenfeder an ihren Enden mitgenommen und eingedreht, so dass sich ihre Schraubenwindungen fest um den Instrumentenschaft schlingen und diesen verklemmen. Dabei wird eine verhältnismässig lange Klemmlinie geschaffen, die ein Verrutschen des Instrumentes ausschliesst. Als besonders vorteilhaft hat sich erwiesen, dass die Klemmwirkung bereits bei geringem Eindrehen der Feder eintritt. Das Auf- und Abschrauben der Schraubkappe erfordert daher keine besonderen Kräfte und kann leicht und rasch mit den Fingern bewerkstelligt werden.

Schliesslich können die Schraubenfedern zusätzlich auch in ihren Schrauborganen verankert sein.

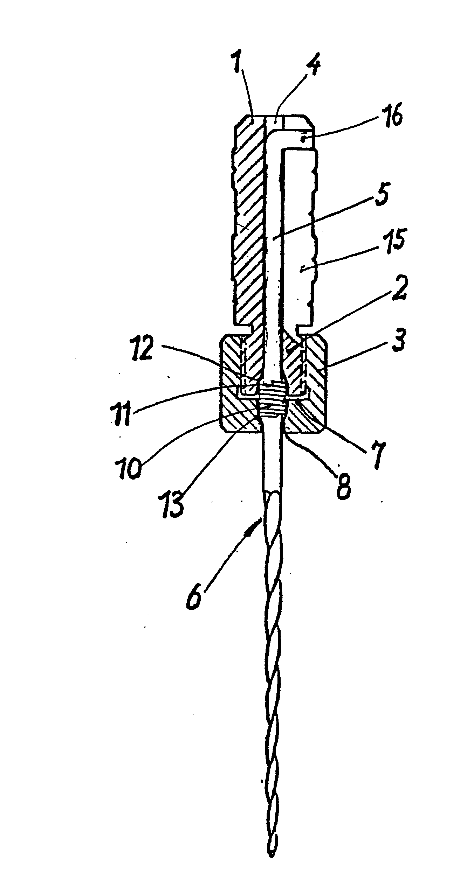

Die Erfindung wird nachfolgend anhand eines Ausführungsbeispiels, das auch in der Zeichnung im Schnitt dargestellt ist, näher beschrieben.

Der Klemmgriff umfasst einen Griffkörper 1 mit einem Schraubkopf und einer Schraubkappe 3, die mit ihrem Innengewinde auf ein Aussengewinde des Schraubkopfes aufschraubbar ist. Griffkörper 1 und Schraubkopf 2 sind von einer Axialbohrung 4 durchsetzt, in der ein Instrumentenschaft 5 eines Zahnwurzelkanal-Instrumentes 6 mit leichtem Spiel geführt und verschiebbar ist. Auch die Schraubkappe 3 weist in ihrer Deckenwand 7 eine auf die Axialbohrung 4 ausgerichtete Bohrung 8 auf, die auch geringfügig grösser als die Axialbohrung 4 sein kann. Um das eingesetzte Instrument in einer Arbeitsstellung festzuklemmen, ist zwischen dem Schraubkopf 2 und der Schraubkappe 3 eine Schraubenfeder 10 als Klemmorgan eingesetzt. Diese Schraubenfeder bildet ebenfalls einen Durchsteckkanal 11 für den Instrumentenschaft 5, welcher einen geringfügig, beispielsweise um 0,1 mm grösseren Durchmesser als der Instrumentenschaft aufweisen kann. Zum Unterbringen der Schraubenfeder zwischen Schraubkopf und Schraubkappe sind darin gegenüberliegende Aufnahmebohrungen 12, 13 ausgebildet, in die die Klemmfeder mit ihren Enden eingesetzt wird. Die Tiefe dieser Aufnahmebohrungen ist auf die Federlänge so abgestimmt, dass die gegenüberliegenden Stirnflächen der beiden Schrauborgane auch in Klemmstellung, d.h. in verspanntem Zustand, nicht zum Anschlag kommen können. Diese Aufnahmebohrungen verjüngen sich nach innen konisch und ihr Durchmesser ist so gross, dass die Schraubenfeder unter Passsitz und hohem Reibungsschluss darin festsitzt. Da die Federenden meist auf den Bohrungsböden aufsitzen werden, reicht ein solcher Reibungsschluss, um die Klemmfeder an den Enden festzuhalten und sie beim Aufschrauben der Schraubkappe 3 derart einzudrehen, dass dadurch der Instrumentenschaft festgeklemmt wird. Durch den Konus werden die Schraubenfederenden in den Schrauborganen beim Aufschrauben der Schraubkappe mit ansteigender Spannkraft festgehalten, so dass auf weitere Einrichtungen in den Aufnahmebohrungen verzichtet werden kann. Zusätzlich könnte die Klemmfeder auch in den zugehörigen Schrauborganen verankert sein, beispielsweise durch Eingriff der in Axialrichtung umgebogenen Federenden in in den Bodenflächen der Aufnahmebohrungen angebrachten Löchern (nicht gezeichnet). Um in diesem Zusammenhang diesen Eingriff nicht auf eine bestimmte Drehstellung zu beschränken, könnten auch mehrere solcher Einstecklöcher für die Federenden ausgebildet sein. Anstelle dieser Einstecklöcher können auch Zahnkränze oder dgl. Sperreinrichtungen zur Verriegelung der Federenden dienen.

Ein wirksames Eindrehen der Schraubenfeder zum Verengen ihres Durchsteckkanals 11 setzt voraus, dass ihre Schraubenwindungen zum Schraubgewinde entgegengesetzt gerichtet sind. Es genügt in der Regel, wenn die Klemmfeder lose in die Aufnahmebohrungen eingelegt wird. Hierdurch wird die Montage und Demontage wesentlich erleichtert. Der Innendurchmesser der Klemmfeder ist etwa 0,1 mm grösser als der Schaftdurchmesser. Als günstige Steigungen der Konen der Aufnahmebohrungen haben sich 30° bis 40°, vorzugsweise 35°, ergeben. Es ist ferner vorteilhaft, die Schraubkappe nach dem Einsetzen der Schraubenfeder auf dem Schraubkopf gegen unvorhergesehenes Abdrehen zu sichern.

Um ein in den Klemmgriff eingeführtes Instrument 6 auf eine bestimmte Arbeitslänge einzustellen, wird zunächst das Instrument bei gelockerter Schraubkappe 3 in die gewünschte Stellung verschoben und dann die Schraubkappe festgeschraubt, wodurch die Schraubenfeder eingedreht und dadurch ihr Durchsteckkanal verengt wird, bis der Instrumentenschaft festgeklemmt ist. Da die Schraubenfeder dabei sehr wirksam anspricht, genügen dazu schon kleine Aufschraubbewegungen an der Schraubkappe, wie andererseits die Klemmwirkung bereits bei geringem Zurückdrehen der Schraubkappe wieder aufgehoben ist.

· Wenn beim gezeigten Ausführungsbeispiel der Griffkörper einen Längsschlitz 15 aufweist, um darin einen abgewinkelten Instrumentenschaft 16 gegen Verdrehung zu sichern und um die Längeneinstellung des Instrumentes kontrollieren zu können, so sollen damit andere Griffkörper nicht ausgeschlossen sein. Die erfindungsgemässe Klemmverbindung ist auch nicht auf Klemmgriffe für Handgeräte beschränkt. Auch in Einsatz- oder Winkelstücken für hand- oder motorgetriebene Geräte ist sie in gleicher Weise brauchbar. Die Teile können aus Kunststoff, Metall oder aus beiden Materialien gefertigt sein. Um die Handhabung zu erleichtern, ist der Griffkörper und/oder die Schraubkappe mit einer Rändelung oder Kordelung versehen.

## Patentansprüche

1. Klemmgriff zur Halterung eines Zahnwurzelkanal-Instrumentes in einem Griffkörper (1), an dem ein Schraubkopf (2) mit einem Aufschraubgewinde ausgebildet ist, mit einer auf diesen Schraubkopf aufgeschraubten Schraubkappe (3), mit den Griffkörper, den Schraubkopf und die Schraubkappe durchsetzenden Axialbohrungen (4, 8) zur Aufnahme eines Instrumentenschaftes (5) sowie mit einem zwischen dem Schraubkopf (2) und der Schraubkappe (3) eingesetzten, den Instrumentenschaft (5) lose umschliessenden Klemmorgan (10), das beim Verschrauben der beiden Schrauborgane (2, 3) am Instrumentenschaft (5) angreift und ihn festklemmt, dadurch gekennzeichnet, dass das Klemmorgan eine zum Schraubgewinde entgegengesetzt gängige Schraubenfeder (10) ist, die mit ihren Enden in gegenüberliegenden, zu den Axialbohrungen (4, 8) koaxialen und sich nach innen konisch verjüngenden Aufnahmebohrungen (12, 13) der Schrauborgane (2, 3) durch Reibungsschluss festsitzt.

2. Klemmgriff nach Anspruch 1, dadurch gekennzeichnet, dass mindestens ein Schraubenfederende im zugehörigen Schrauborgan (2 oder 3) verankerbar ist.

3. Klemmgriff nach Anspruch 1 oder 2, dadurch gekennzeichnet, dass mindestens eine der Aufnahmebohrungen (12, 13) eine den Reibungsschluss mit der Schraubenfeder (10) verstärkende Boden- und/oder Umfangsfläche aufweist.

## Claims

1. Clamping handle for securing a dental root canal instrument in a grip (1) on which a threaded head (2) with an outside thread is fixed, said clamping handle having a screw-on cap (3) which can be screwed onto said threaded head, axial bores (4, 8) extending through the grip, the treaded head and the screw-on cap for taking up a shaft (5) of the instrument, and a clamping means (10) being inserted between the threaded head (2) and the screw-on cap (3), surrounding loosely the shaft (5) of the instrument, engaging in the shaft (5) of the instrument and clamping it when the two threaded elements (2, 3) are being screwed together, characterized in that the clamping means is a helical spring (10), having coils in opposite direction to the direction of the threads, the ends of the spring being held frictionally engaged in opposing take-up bores (12, 13) of the threaded elements (2, 3), the take-up bores (12, 13) being positioned coaxially to the axial bores (4, 8) and tapering conically inward.

2. Clamping handle according to claim 1, characterized in that at least one end of the helical spring can be anchored in the respective threaded element (2 or 3).

3. Clamping handle according to one of the claims 1 or 2, characterized in that at least one of the take-up bores (12) has a ground surface and/or peripheral surface increasing the frictional locking action with the helical spring (10).

## Revendications

1. Manche de serrage servant à retenir un instrument destiné à être introduit dans les canaux radiculaires des dents, comportant une poignée (1), sur laquelle est ménagée une tête filetée (2) munie d'un filetage extérieur, un capuchon vissable (3) pouvant être vissé sur cette tête filetée, des perçages axiaux (4, 8) traversant la poignée, la tête filetée et le capuchon vissable et servant à loger une tige (5) de l'instrument, ainsi qu'un organe de serrage (10), qui est inséré entre la tête filetée (2) et le capuchon vissable (3), entoure de façon lâche la tige (5) de l'instrument et s'applique sur la tige (5) de l'instrument et la bloque lors du vissage des deux organes filetés (2, 3), caractérisé en ce que l'organe de serrage est un ressort hélicoïdal (10), dont le sens du filetage est opposé à celui du filetage extérieur et qui se fixe, par ses extrémités, selon une liaison par frottement, dans des perçages récepteurs opposés (12, 13) des organes filetés (2, 3), ces perçages étant coaxiaux aux perçages axiaux (4, 8) et se rétrécissant intérieurement avec une forme conique.

2. Manche de serrage selon la revendication 1, caractérisé en ce qu'au moins une extrémité du ressort hélicoïdal peut être ancrée dans l'organe fileté associée (2 ou 3).

3. Manche de serrage selon la revendication 1 ou 2, caractérisé en ce que dans au moins l'un des perçages récepteurs (12, 13), il est prévu une surface du fond et/ou une surface périphérique qui renforce la liaison par frottement avec le ressort hélicoïdal (10).